# EUROPÄISCHE PATENTANMELDUNG

(11) **EP 3 006 376 A1**
(43) Veröffentlichungstag der Anmeldung: **13.04.2016**
(21) Anmeldenummer: 15188961.5
(22) Anmeldetag: 08.10.2015
(51) Int. Cl.: B65G 1/04

(54) **REGALLAGER UND VERFAHREN ZUM STEUERN DES FAHRWEGS EINES REGALBEDIENGERÄTS IN EINEM REGALLAGER**

(30) Priorität: 09.10.2014 DE 102014114703
(71) Anmelder: KEURO Besitz GmbH & Co. EDV-Dienstleistungs KG, 77855 Achern (DE)
(72) Erfinder: Stolzer, Armin, 76530 Baden-Baden (DE); Mutschler, Christoph, 79336 Herbolzheim (DE)
(74) Vertreter: Lemcke, Brommer & Partner Patentanwälte Partnerschaft mbB

(57) **Zusammenfassung**

Ein Regallager 1 und ein Verfahren zum Steuern des Fahrwegs 6 eines Regalbediengeräts in einem Regallager 1, umfassend mindestens ein Regalbediengerät mit mindestens zwei unabhängig voneinander steuerbaren, mittels elektrischer Motoren betriebenen Bewegungsachsen 5, x, y zum Ausführen einer Bewegung von einem Startpunkt 3 zu einem Zielpunkt 4, weiterhin umfassend eine Steuereinheit zum Steuern der Motoren der Bewegungsachsen x, y des Regalbediengeräts sowie einen elektrischen Zwischenkreis zum Austauschen von rückgespeister elektrischer Energie zwischen den Motoren. Die Steuereinheit ist so ausgebildet, dass sie die für eine Bewegung vom Startpunkt 3 zum Zielpunkt 4 erforderlichen Bewegungsabläufe der einzelnen Bewegungsachsen x, y vorausberechnet und aufeinander abstimmt, und dass sie die Motoren der Bewegungsachsen x, y so ansteuert, dass das Regalbediengerät die Bewegung auf einem vorausberechneten Fahrweg 6 ausführt, der auf einem Satz von aufeinander abgestimmten Bewegungsabläufen der einzelnen Bewegungsachsen basiert. Die Steuereinheit berechnet eine Menge mit mehreren Sätzen von aufeinander abgestimmten Bewegungsabläufen, wobei diese Menge zumindest einen ersten Satz mit hinsichtlich der Schnelligkeit der Bewegung optimierten Bewegungsabläufen für einen Schnellgang und einen zweiten Satz mit hinsichtlich des Verbrauchs an elektrischer Energie optimierten Bewegungsabläufen für einen Spargang enthält. Anhand von Betriebsparametern des Regallagers, insbesondere anhand der für eine Bewegung zur Verfügung stehenden Zeit, wählt die Steuereinheit einen Satz mit Bewegungsabläufen aus der berechneten Menge aus, um die Motoren der Bewegungsachsen zum Ausführen eines Fahrwegs anzusteuern.

## Beschreibung

Die Erfindung betrifft ein Regallager mit mindestens einem Regalbediengerät nach dem Oberbegriff des Anspruchs 12 sowie ein Verfahren zum Steuern des Fahrwegs eines Regalbediengeräts in einem Regallager nach dem Oberbegriff des Anspruchs 1.

Ein solches Regallager umfasst demnach mindestens ein Regalbediengerät mit mindestens zwei unabhängig voneinander steuerbaren, mittels elektrischer Motoren betriebenen Bewegungsachsen zum Ausführen einer Bewegung von einem Startpunkt zu einem Zielpunkt, um Lagergut innerhalb des Regallagers und/oder in das oder aus dem Regallager zu transferieren. Außerdem ist ein elektrischer Zwischenkreis zum Austauschen von rückgespeister elektrischer Energie zwischen den Motoren vorgesehen. Über diesen ist es möglich, elektrische Energie, die beim Abbremsen einer Bewegungsachse durch generatorischen Betrieb des entsprechenden Motors rückgespeist wird, den anderen Motoren zum Verbrauch zur Verfügung zu stellen. Schließlich ist eine Steuereinheit zum Steuern der Motoren der Bewegungsachsen des Regalbediengeräts vorgesehen. Diese berechnet die für eine Bewegung vom Startpunkt zum Zielpunkt erforderlichen Bewegungsabläufe der einzelnen Bewegungsachsen voraus und stimmt diese aufeinander ab. Die Motoren der Bewegungsachsen werden dann von der Steuereinheit so angesteuert, dass das Regalbediengerät die Bewegung auf einem vorausberechneten Fahrweg ausführt, der auf einem Satz von aufeinander abgestimmten Bewegungsabläufen der einzelnen Bewegungsachsen basiert.

Somit setzt die eben genannte Steuereinheit ein Verfahren der vorliegenden Art um. Denn bei diesem werden die für eine Bewegung eines Regalbediengeräts mit mindestens zwei unabhängig voneinander steuerbaren, mittels elektrischer Motoren betriebenen Bewegungsachsen von einem Startpunkt zu einem Zielpunkt erforderlichen Bewegungsabläufe der einzelnen Bewegungsachsen vorausberechnet und aufeinander abgestimmt. Die Motoren der Bewegungsachsen werden solcherart angesteuert, dass das Regalbediengerät die Bewegung auf einem vorausberechneten Fahrweg ausführt, der auf einem Satz von aufeinander abgestimmten Bewegungsabläufen der einzelnen Bewegungsachsen basiert.

Regallager der vorliegenden Art umfassen in der Regel mehrere Regalbediengeräte, die jeweils in einer Regalgasse verfahrbar angeordnet sind und auf jedes Regalfach der Regalgasse zugreifen können. Hierdurch kann ein automatisches Lager verwirklicht werden, in dem insbesondere schweres Lagergut, das nicht händisch bewegt werden kann, gelagert ist. Besonders geeignet ist dieses Regallager für Lagergut, auf das wiederholt zugegriffen werden muss, wie dies beispielsweise im Metallhandel der Fall ist. Dort werden bevorratete Metallstangen, Profile und dergleichen im Regallager vorgehalten, um nach Erhalt eines Auftrags aus dem Regallager entnommen und beispielsweise einer Sägemaschine zugeführt zu werden, wo die beauftragte Menge des Materials abgelängt und zusammen mit anderem beauftragten Material kommissioniert wird. Die nach dem Ablängen verbliebenen Reststücke werden dann wieder in das Regallager rückgelagert.

Ein solches Regallager wird mit einer zentralen Steuerung betrieben, die die einzelnen Regalbediengeräte ansteuert, so dass vorhandene Aufträge sukzessive abgearbeitet werden. Für einen Auftrag ist es beispielsweise nötig, eine Metallstange aus einem ersten Regalfach einer ersten Regalgasse zu entnehmen, dieses einer vor der Regalgasse angeordneten Sägemaschine zuzuführen, dort ein Stück der Stange abzusägen und die Reststange wieder zurückzulagern, während aus einem zweiten Regalfach einer anderen Regalgasse ein Profil entnommen und derselben Sägemaschine zugeführt werden muss, um auch von diesem Profil ein Stück abzusägen, und dergleichen weiter, bis der Auftrag abgearbeitet ist und die abgesägten Stücke kommissioniert sind.

Es liegt auf der Hand, dass das Regallager um so leistungsfähiger ist, je schneller das Regalbediengerät die erforderlichen Bewegungen vom Startpunkt, beispielsweise dem Regalfach, bis zum Zielpunkt, beispielsweise einer Übergabestelle an die Sägemaschine, durchführt. Es ist im Stand der Technik daher noch immer üblich, die Motoren der einzelnen Bewegungsachsen der Regalbediengeräte jeweils mit Maximalgeschwindigkeit und Maximalbeschleunigungen anzusteuern, um die Bewegung schnellstmöglich durchzuführen. Dies ist allerdings unter Kostenaspekten nicht optimal, da der Verbrauch an elektrischer Energie mit dieser Verfahrensweise ebenfalls maximal ist. Die gleichzeitige maximale Beschleunigung aller Bewegungsachsen verursacht darüber hinaus nachteilige Spitzen in der Leistungsaufnahme des Regallagers.

In der WO-A-2008/025499 ist daher vorgeschlagen worden, die Steuereinheit eines Regallagers der vorliegenden Art so auszugestalten, dass diese für eine Bewegung eines Regalbediengeräts von einem Startpunkt zu einem Zielpunkt zunächst die zeitkritische Bewegungsachse ermittelt, d.h. diejenige Bewegungsachse, die bei Maximalgeschwindigkeit aller Motoren des Regalbediengeräts die längste Zeit für den notwendigen Bewegungsablauf benötigt. Dies wird in der Regel diejenige Bewegungsachse sein, die den längsten Weg zurücklegen muss; es kann sich aber auch um die langsamste Bewegungsachse handeln. Diese zeitkritische Bewegungsachse wird von der Steuereinheit mit einem Maximalgeschwindigkeits-Bewegungsablauf angesteuert, also mit maximaler Geschwindigkeit des zugehörigen Motors und maximalen Beschleunigungen. Die restlichen Bewegungsachsen werden im Verhältnis zur zeitkritischen Bewegungsachse energieoptimiert gesteuert, so dass sich die Motoren der einzelnen Bewegungsachsen gegenseitig ein Maximum an Bremsenergie zur Verfügung stellen können. Dies bedeutet insbesondere, dass Beschleunigungsvorgänge der Motoren der nicht zeitkritischen Bewegungsachsen vorzugsweise dann vorgesehen sind, wenn vom Motor der zeitkritischen Bewegungsachse elektrische Energie rückgespeist wird.

Der Stand der Technik nach der WO-A-2008/117248 ermöglicht also einen Betrieb eines Regallagers, dessen Bedarf an elektrischer Energie vorteilhaft verringert ist, ohne die Leistungsfähigkeit des Regallagers zu beeinträchtigen, da die einzelnen Bewegungen der Regalbediengeräte gegenüber dem bisher dagewesenen insgesamt nicht verlangsamt werden.

Ausgehend von diesem Stand der Technik liegt der vorliegenden Erfindung die Aufgabe zugrunde, ein Regallager sowie ein Verfahren der eingangs genannten Art hinsichtlich des Energiebedarfs weiter zu verbessern.

Gelöst ist diese Aufgabe durch ein Verfahren mit den Merkmalen des Patentanspruchs 1 sowie durch ein Regallager mit den Merkmalen des Patentanspruchs 12.

Vorteilhafte Weiterbildungen des erfindungsgemäßen Verfahrens finden sich in den Patentansprüchen 2 bis 11; bevorzugte Ausgestaltungen des erfindungsgemäßen Regallagers sind in den Patentansprüchen 13 bis 17 niedergelegt.

Das erfindungsgemäße Verfahren zeichnet sich demnach dadurch aus, dass nicht nur ein Satz von aufeinander abgestimmten Bewegungsabläufen erstellt, sondern dass eine Menge mit mehren Sätzen von aufeinander abgestimmten Bewegungsabläufen berechnet wird. Diese Menge enthält zumindest einen ersten Satz mit hinsichtlich der Schnelligkeit der Bewegung optimierten Bewegungsabläufen für einen Schnellgang und einen zweiten Satz mit hinsichtlich des Verbrauchs an elektrischer Energie optimierten, oder zumindest teilweise optimierten Bewegungsabläufen für einen Spargang. Anhand von Betriebsparametern des Regallagers wird sodann ein Satz mit Bewegungsabläufen aus der berechneten Menge ausgewählt, um die Motoren der Bewegungsachsen des Regalbediengeräts zum Ausführen eines Fahrwegs anzusteuern.

Ein Hauptkriterium für die Auswahl eines Bewegungsablaufsatzes ist die für eine Bewegung vom Startpunkt bis zum Zielpunkt zur Verfügung stehende Zeit. Denn wenn mehr Zeit zur Verfügung steht, als das Regalbediengerät im Schnellgang für die Bewegung vom Startpunkt zum Zielpunkt benötigt, kann ein Bewegungsablaufsatz ausgewählt werden, mit dem die Motoren des Regalbediengeräts weniger elektrische Energie verbrauchen und/oder mit dem die Motoren geschont werden. Dies kann ein Bewegungsablaufsatz mit langsameren Beschleunigungen sein, oder auch der Bewegungsablaufsatz für den Spargang. In jedem Fall wird durch diese erfindungsgemäße Maßnahme beim Betrieb des Regallagers elektrische Energie eingespart, ohne die aktuell benötigte Leistung des Regallagers zu beeinträchtigen.

Das erfindungsgemäße Regallager ist gegenüber dem Stand der Technik dadurch verbessert worden, dass die Steuereinheit das erfindungsgemäße Verfahren umsetzt, also eine Menge mit mehren Sätzen von aufeinander abgestimmten Bewegungsabläufen berechnet, wobei diese Menge zumindest einen ersten Satz mit hinsichtlich der Schnelligkeit der Bewegung optimierten Bewegungsabläufen für einen Schnellgang und einen zweiten Satz mit hinsichtlich des Verbrauchs an elektrischer Energie optimierten, oder zumindest teilweise optimierten Bewegungsabläufen für einen Spargang enthält. Die Steuereinheit wählt sodann anhand von Betriebsparametern des Regallagers, insbesondere anhand der für eine Bewegung zur Verfügung stehenden Zeit, einen Satz mit Bewegungsabläufen aus der berechneten Menge aus, um die Motoren der Bewegungsachsen zum Ausführen eines Fahrwegs anzusteuern.

Die zum Ausführen einer Bewegung des Regalbediengeräts zur Verfügung stehende Zeit kann von verschiedenen Betriebsparametern des Regallagers abhängen. Dies kann beispielsweise die momentane Auslastung des Regallagers sein, die von der Menge und der Reihenfolge der abzuarbeitenden Aufträge abhängt. Wenn die Menge der abzuarbeitenden Aufträge in einer Zeiteinheit, beispielsweise innerhalb eines Tages, nicht die volle Leistungsfähigkeit des Regallagers erfordert, sondern alle Aufträge auch langsamer abgearbeitet werden können und dennoch am Ende des Tage alle Aufträge abgearbeitet sind, können energieoptimierte Bewegungsablaufsätze ausgewählt werden. Ebenso steht für eine Bewegung mehr Zeit zur Verfügung, wenn beispielsweise zwei Regalbediengeräte in unterschiedlichen Regalgassen einem gemeinsamen Zielpunkt zuarbeiten, der jedoch nur nacheinander bedient werden kann. In diesem Fall kann es sinnvoll sein, eines der beiden Regalbediengeräte erfindungsgemäß energieoptimiert oder im Schongang zu betreiben. Ein weiteres Beispiel für die Anwendbarkeit der Erfindung ist das Zusammenarbeiten eines Regallagers mit beispielsweise einer Sägemaschine, bei der es nicht sinnvoll ist, zu sägendes Material anzuliefern, solange der vorherige Sägevorgang noch nicht abgeschlossen ist. In diesem Fall kann ein Regalbediengerät erfindungsgemäß im Spargang betrieben werden, da mit dem Schnellgang kein Zeitvorteil erzielt wird, weil das Lagergut zu früh bei der Sägemaschine ankommen würde.

Als Verfeinerung der erfindungsgemäßen Verfahrensweise kann die Steuereinheit des Regalbediengeräts, auf entsprechende Algorithmen gestützt, abwägen, wie viel Zeitersparnis im Schnellgang-Modus welcher Energieeinsparung gegenübersteht, die im Spargang oder einem sonstigen, gegebenenfalls teilweise energieoptimierten Bewegungsablaufsatz erzielt werden kann, und dann aufgrund vorgegebener Schwellenwerte entscheiden, welcher Bewegungsablaufsatz für die Durchführung der Bewegung verwendet wird. Denn oft kann eine leichte Verzögerung, die hinsichtlich des Zeitmehraufwands kaum ins Gewicht fällt, eine signifikante Energieeinsparung bewirken. Als Beispiel sei eine zweidimensionale Bewegung von einem hochliegenden Regalplatz als Startpunkt zu einem Zielpunkt im Bereich des Bodens, in horizontaler Richtung weit vom Regalplatz beanstandet, genannt: Die horizontale Bewegung wäre in diesem Fall die zeitkritische Bewegungsachse, die im Schnellgang mit Maximalgeschwindigkeits-Bewegungsablauf anzusteuern ist. Dies bedeutet, dass der entsprechende Motor vom Beginn der Bewegung an mit voller Beschleunigung betrieben wird. Verzögert man jedoch die Beschleunigung dieses Motors und senkt das Lagergut erst einmal ein Stückchen ab, so kann der Motor für die horizontale Bewegungsachse vom Motor für die vertikale Bewegungsachse rückgespeiste elektrische Energie zur Beschleunigung verwenden, was eine signifikante Energieeinsparung bewirkt. Die zeitliche Verzögerung könnte demgegenüber vernachlässigbar sein.

Der erfindungsgemäß berechnete Satz mit hinsichtlich der Schnelligkeit der Bewegung optimierten Bewegungsabläufen enthält vorzugsweise einen Maximalgeschwindigkeits-Bewegungsablauf für die zeitkritische Bewegungsachse, d.h. für diejenige Bewegungsachse, die bei Maximalgeschwindigkeit aller Motoren des Regalbediengeräts für eine bestimmte Bewegung vom Startpunkt zum Zielpunkt die meiste Zeit für den notwendigen Bewegungsablauf benötigt. Die restlichen Bewegungsachsen des Regalbediengeräts können dann mit abgestimmten Bewegungsabläufen angesteuert werden, die im Ergebnis zu einem im Wesentlichen kürzestmöglichen Fahrweg führen. Dies optimiert naturgemäß den Energieverbrauch der restlichen Bewegungsachsen, ohne die Maximalgeschwindigkeit für die Bewegung in irgendeiner Weise zu beeinträchtigen.

Alternativ können für die restlichen Bewegungsachsen des Regalbediengeräts Bewegungsabläufe errechnet werden, die vor dem oder gleichzeitig mit dem Bewegungsablauf der zeitkritischen Bewegungsachse enden, um die Maximalgeschwindigkeit nicht zu beeinträchtigen, mit denen jedoch die entsprechend angesteuerten Motoren möglichst wenig elektrische Energie benötigen oder möglichst schonend betrieben werden. Dies ist eine Optimierungsfrage und kann beispielsweise beinhalten, bei einem Regalbediengerät mit zwei Bewegungsachsen die nicht zeitkritische Bewegungsachse mit möglichst geringen Beschleunigungswerten anzusteuern, um möglichst wenig elektrische Energie zu verbrauchen oder den Verschleiß der beteiligten Motoren und sonstiger bewegter Teile zu minimieren.

Eine weitere Alternative besteht darin, die restlichen Bewegungsachsen mit Bewegungsabläufen zu steuern, die vor dem oder gleichzeitig mit dem Bewegungsablauf der zeitkritischen Bewegungsachse enden, und in welchem Beschleunigungsvorgänge der zugehörigen Motoren vorzugsweise dann vorgesehen sind, wenn von Motoren anderer Bewegungsachsen, insbesondere vom Motor der zeitkritischen Bewegungsachse, elektrische Energie in den Zwischenkreis rückgespeist wird. Auch dies ist eine Optimierungsfrage, die softwaregestützt von der Steuereinheit übernommen werden kann. Naturgemäß sinkt der Energiebedarf signifikant, wenn ein Motor eines Regalbediengeräts die rückgespeiste Bremsenergie eines anderen Motors zum Anlaufen verwenden kann.

Hinsichtlich des Bewegungsablaufsatzes für den Spargang, also des Satzes mit hinsichtlich des Verbrauchs an elektrischer Energie optimierten Bewegungsabläufen, ist es im Rahmen der vorliegenden Erfindung bevorzugt, diesen Satz solcherart zu ermitteln, dass Beschleunigungsvorgänge der den Bewegungsachsen zugeordneten Motoren vorzugsweise dann vorgesehen sind, wenn von Motoren anderer Bewegungsachsen elektrische Energie in den Zwischenkreis rückgespeist wird. Im Rahmen der vorliegenden Erfindung können jedoch auch andere hinsichtlich des Verbrauchs an elektrischer Energie optimierte Bewegungsabläufe und Bewegungsablaufkombinationen verwendet werden.

Bei der Auswahl eines Satzes mit Bewegungsabläufen wird erfindungsgemäß vorzugsweise die momentane Auslastung des Regallagers berücksichtigt. Ebenfalls bevorzugt berücksichtigt wird hierzu der momentane Anlagenzustand des Regallagers, insbesondere ob ein mit dem zu bewegenden Regalbediengerät transferiertes Lagergut an ein weiteres Handlingssystem weitergegeben werden soll und wann dieses weitere Handlingssystem für das Lagergut aufnahmebereit ist. Wie bereits erwähnt, kann dieses weitere Handlingssystem beispielsweise eine Zuführeinheit für eine Sägemaschine oder dergleichen sein.

Neben dem Bewegungsablaufsatz für einen Schnellgang und dem Bewegungsablaufsatz für einen Spargang sowie gegebenenfalls weiteren Bewegungsablaufsätzen ist es im Rahmen der vorliegenden Erfindung bevorzugt, wenn ein weiterer Satz mit hinsichtlich des Verschleißes des Regalbediengeräts und dessen Motoren optimierten Bewegungsabläufen für einen Schongang errechnet wird. Denn auch dann, wenn eine Bewegung ausgeführt werden muss, die nur sehr wenig Potential für das Einsparen von elektrischer Energie bietet, jedoch genügend Zeit vorhanden ist, um nicht im Schnellgang zu fahren, ergeben sich durch einen schonenden Betrieb des Regalbediengeräts und von dessen Motoren Vorteile hinsichtlich der Lebensdauer aller beteiligten bewegten Teile.

Bei der Auswahl eines Satzes mit Bewegungsabläufen kann im Rahmen der vorliegenden Erfindung eine vorwählbare und/oder durch einen Prognosealgorithmus bestimmte Verzögerungszeit berücksichtigt werden. Je nach Erfahrung eines Bedieners oder errechneter Prognose kann eine Verzögerungszeit vorgewählt werden, die zunächst die Leistungsfähigkeit des Regallagers beeinträchtigt, da die einzelnen Aufträge eine entsprechend längere Zeit benötigen. Jedoch kann sich dies durch Schwankungen der Aufträge über beispielsweise einen Tag hinweg ausmitteln, so dass das Regallager am Ende des Tages mit der vorgewählten Verzögerungszeit dennoch insgesamt die gleiche Leistung erbracht hat, wie mit Bewegungsabläufen ohne Verzögerungszeit, die gegebenenfalls wegen einiger über den Tag verteilten Auftragsvolumenspitzen des Öfteren als Schnellgang ausgeführt wurden. Insgesamt ergibt sich so erfindungsgemäß eine Einsparung an elektrischer Energie und/oder ein schonenderes Betreiben des Regallagers.

Die genannte Verzögerungszeit wird hierbei solcherart berücksichtigt, dass ein Satz mit hinsichtlich der Schnelligkeit der Bewegung optimierten Bewegungsabläufen für einen Schnellgang so vorausberechnet wird, dass für die zeitkritische Achse ein Bewegungsablauf errechnet wird, der um bis zum Wert der Verzögerungszeit langsamer als der Maximalgeschwindigkeits-Bewegungsablauf ist und/oder bis zum Wert der Verzögerungszeit später gestartet wird, abhängig von der hierdurch erzielbaren Einsparung an elektrischer Energie oder der hierdurch erzielbaren Reduzierung des Verschleißes des Regalbediengeräts und seiner Motoren.

Im Rahmen der vorliegenden Erfindung ist es weiter bevorzugt, wenn das Regalbediengerät oder mehrere Regalbediengeräte, beispielsweise mittels eines zentralen Lagerverwaltungsrechners, abhängig von bereits erhaltenen Aufträgen oder abhängig von Prognosen zur zukünftigen Auslastung des Regallagers, in Arbeitspausen oder Arbeitsunterbrechungen Lagergut umschichten, um die Transportwege des umgeschichteten Lagerguts hinsichtlich erwarteter Bewegungsabläufe für einen Schnellgang zu optimieren.

Hierbei ist es vorteilhaft, wenn für das Umschichten des Lagerguts der hierfür zusätzlich anfallende Bedarf an elektrischer Energie errechnet wird. Gleichzeitig werden dann mittels einer Prognose über die Anzahl der wahrscheinlich im Schnellgang durchzuführenden Bewegungsabläufe die möglichen Energieeinsparungen an elektrischer Energie, die durch das Umschichten des Lagerguts ermöglicht werden, abgeschätzt. Eine Saldierung des errechneten zusätzlichen Bedarfs und der abgeschätzten möglichen Einsparungen führt dann zu einem Ergebnis, mit dem ein Umschichten des Lagerguts initiiert oder ein solches unterdrückt wird.

Die Prognosen für das Umschichten sowie auch für die wahrscheinlich tolerierbare Verzögerungszeit und für die möglichen Einsparungen an elektrischer Energie erfolgen mittels statistischer Auswertungen von Auslastungen des Regallagers in der Vergangenheit, oder vergleichbarer Regallager, oder mittels in Fachveröffentlichungen verfügbarer Prognoseszenarien zur Auslastung von einschlägigen Regallagern, abhängig beispielsweise vom Wochentag, von der Jahreszeit sowie von Feiertagssituationen. In die Prognose können auch Informationen aus anderen Abteilungen eines das erfindungsgemäße Regallager betreibenden Unternehmens einfließen, wie beispielsweise Vertragsabschlüsse, strategische Neuausrichtungen, Gespräche und Erkenntnisse aus Fachmessen und dergleichen mehr, die Einfluss auf die zu erwartenden künftigen, im Regallager abzuarbeitenden Aufträge haben.

Anhand der beigefügten Zeichnungen wird ein vereinfachtes Ausführungsbeispiel für die erfindungsgemäße Verfahrensweise beschrieben. Es zeigen:
- Figur 1: eine schematische Ansicht eines Regallagers mit Start- und Zielpunkt;
- Figur 2: eine schematische Darstellung eines Regallagers mit einem ersten Fahrweg;
- Figur 3: eine schematische Darstellung eines Regallagers mit einem zweiten Fahrweg;
- Figur 4: eine schematische Darstellung eines Regallagers mit einem dritten Fahrweg.

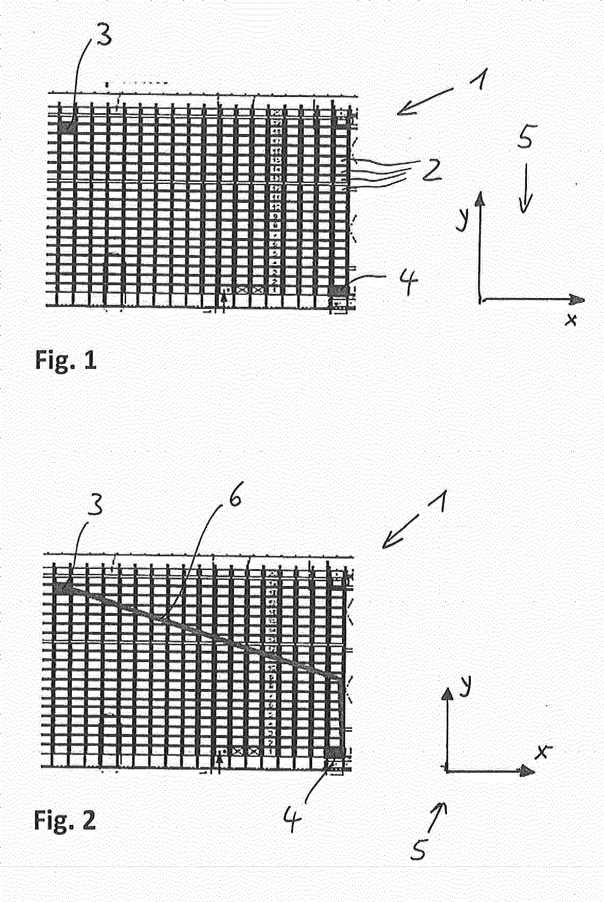

Das in Figur 1 schematisch dargestellte Regallager 1 besteht aus einer Vielzahl von Regalfächern 2, in denen Lagergut, wie beispielsweise Paletten mit Metallprofilen gelagert ist. Ein nicht dargestelltes Regalbediengerät mit zwei Bewegungsachsen 5, einer horizontalen Bewegungsachse x und einer vertikalen Bewegungsachse y, ist in der Lage, jedes der Regalfächer 2 anzufahren und Paletten aus den Regalfächern 2 zu entnehmen oder in diese einzulagern. Hierfür umfasst es in an sich bekannter Art und Weise ein Hubwerk für die Vertikalbewegung (Bewegungsachse y) und ein Fahrwerk für die Horizontalbewegung (Bewegungsachse x), mit dem es auf einer entlang des Regallagers 1 vorgesehenen (ebenfalls nicht dargestellten) Schiene verfahrbar ist.

Die für das vorliegende Ausführungsbeispiel gegebene Aufgabe lautet, eine aus einem Regalfach 2 an einem Startpunkt 3 entnommene Palette von diesem Startpunkt 3 zu einem Zielpunkt 4 zu transferieren, um sie dort einem weiteren (nicht dargestellten) Handlingssystem zu übergeben, das Profile aus der Palette entnimmt und einer (wiederum nicht dargestellten) Sägemaschine zuführt.

Figur 2 zeigt einen ersten möglichen Fahrweg 6 vom Startpunkt 3 zum Zielpunkt 4. Dieser entspricht der herkömmlichen Vorgehensweise und resultiert daraus, dass die Motoren beider Bewegungsachsen 5, also der Motor für die horizontale Bewegung x und der Motor für die vertikale Bewegung y von Beginn an mit einem Maximalgeschwindigkeits-Bewegungsablauf gesteuert werden. Beide Motoren laufen also mit Maximalbeschleunigung an und laufen bis zum Endpunkt des jeweiligen Bewegungsablaufs mit voller Geschwindigkeit, bis sie mit MaximalBremsbeschleunigung abgestoppt werden. Da im vorliegenden Beispiel die Horizontalbewegung x schneller ablaufen kann, als die vertikale Absenkbewegung y, wird der Motor der Horizontalbewegung x gestoppt, noch während die Absenkbewegung y läuft. Es ergibt sich der in Figur 2 dargestellte Fahrweg 6.

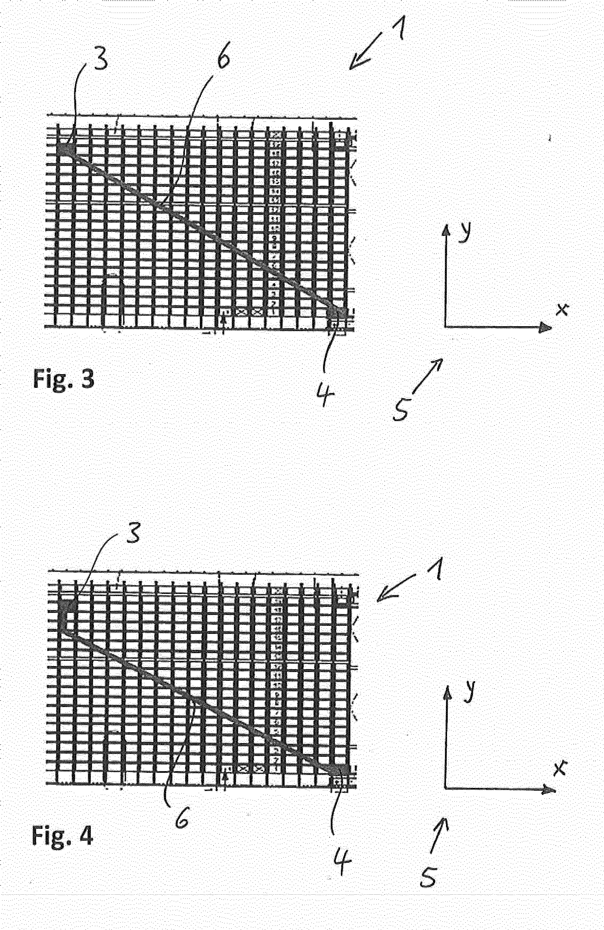

Ein in energetischer Hinsicht verbesserter Fahrweg 6 ist in Figur 3 dargestellt. Hier wird die zeitkritische Bewegungsachse, dies ist im vorliegenden Beispiel die vertikale Absenkbewegung y (vgl. Figur 2), mit einem Maximalgeschwindigkeits-Bewegungsablauf angesteuert, d.h. der entsprechende Motor des Regalbediengeräts wird sofort mit Maximalbeschleunigung gestartet, mit Maximalgeschwindigkeit betrieben und am Zielpunkt 4 mit maximaler Bremsbeschleunigung gestoppt. Der Bewegungsablauf in der Bewegungsachse für die horizontale Bewegung x wurde jedoch solcherart mit dem Bewegungsablauf für die Vertikalbewegung y abgestimmt, dass sich ein geradliniger Fahrweg 6, der der kürzesten Verbindung zwischen dem Startpunkt 3 und dem Zielpunkt 4 entspricht, ergibt. Dies bedeutet, dass der Motor für die horizontale Bewegung x weniger stark als in Figur 2 beschleunigt wird, mit geringerer Geschwindigkeit gefahren wird sowie mit geringerer Bremsbeschleunigung abgestoppt wird. Es liegt auf der Hand, dass die Bewegung entlang des Fahrwegs 6 aus Figur 3 im Ergebnis ebenso schnell wie die Bewegung entlang des Fahrwegs 6 in Figur 2 ist, jedoch weniger elektrische Energie verbraucht, da der Motor für die horizontale Bewegungsachse x nicht mit einem Maximalgeschwindigkeits-Bewegungsablauf angesteuert wird.

Figur 4 zeigt einen Fahrweg 6 zwischen dem Startpunkt 3 und dem Zielpunkt 4, der gegenüber den Fahrwegen 6 aus Figur 2 und Figur 3 weiter energieoptimiert ist. Die Zeit, die für das Zurücklegen des Fahrwegs 6 benötigt wird, ist noch immer unverändert, da der Motor für die vertikale Bewegung y nach wie vor mit einem Maximalgeschwindigkeits-Bewegungsablauf gesteuert wird. Der Motor für die horizontale Bewegung x läuft allerdings verzögert an, und zwar erst nachdem die vertikale Absenkbewegung y begonnen hat. Dies bietet den Vorteil, dass der Motor für die horizontale Bewegung x mit der vom Motor für die vertikale Bewegung y rückgespeisten elektrischen Energie beschleunigt werden kann; denn die vertikale Bewegung y ist im vorliegenden Fall eine Absenkbewegung, so dass der entsprechende Motor generatorisch betrieben wird und elektrische Energie in den Zwischenkreis rückspeist.

Wenn man beim Ausführungsbeispiel nach Figur 4 alternativ davon ausgeht, dass die vertikale Absenkbewegung y schneller ausgeführt werden kann, als die horizontale Bewegung x, d.h. die horizontale Bewegungsachse x wäre in diesem Fall die zeitkritische Bewegungsachse, würde der dargestellte Fahrweg 6 der erfindungsgemäßen Variante entsprechen, abhängig von Betriebsparametern des Regallagers einen Satz von Bewegungsabläufen zu wählen, der in einem Fahrweg 6 resultiert, welcher etwas längere Zeit benötigt, als der in Figur 3 dargestellte Fahrweg 6, jedoch signifikante Energieeinsparungen ermöglicht. Dies würde wiederum dadurch bewirkt, dass die eigentlich zeitkritische Bewegungsachse x verzögert nach Anlaufen des Motors der Bewegungsachse y gestartet wird, um die vom Motor der Bewegungsachse y rückgespeiste elektrische Energie nutzen zu können. Erfindungsgemäß führt die Steuerung diesen Fahrweg 6 dann aus, wenn entweder für den konkreten Auftrag, Lagergut vom Startpunkt 3 zum Zielpunkt 4 zu transferieren, ohnehin genügend Zeit vorhanden ist, oder wenn der Nutzen der Energieeinsparung den Nachteil einer längeren Bewegung überwiegt.

Soweit die vertikale Bewegungsachse y die zeitkritische Bewegungsachse ist (Figur 2), zeigen die Figuren 3 und 4 abgestuft energieoptimierte Varianten des Fahrwegs 6, mit denen gegenüber dem herkömmlichen Stand der Technik (Figur 2) elektrische Energie eingespart werden kann, ohne die zum Zurücklegen des Fahrwegs 6 benötigte Zeit zu verlängern.

Soweit hingegen die horizontale Achse x die zeitkritische Bewegungsachse ist, stellt der Fahrweg 6 in Figur 3 den erfindungsgemäßen Schnellgang dar, während der Fahrweg 6 gemäß Figur 4 ein erfindungsgemäß energieoptimierter Spargang ist.

Die anhand der Figuren 1 bis 4 erläuterten Ausführungsbeispiele sind lediglich dazu gedacht, die erfindungsgemäßen Zusammenhänge an einfachen Beispielen zu verdeutlichen. Selbstverständlich ist die Erfindung nicht auf solche einfachen Verhältnisse beschränkt.

## Patentansprüche

1. Verfahren zum Steuern des Fahrwegs eines Regalbediengeräts mit mindestens zwei unabhängig voneinander steuerbaren, mittels elektrischer Motoren betriebenen Bewegungsachsen (5, x, y) zum Ausführen einer Bewegung von einem Startpunkt (3) zu einem Zielpunkt (4) in einem Regallager (1), wobei die für eine Bewegung vom Startpunkt (3) zum Zielpunkt (4) erforderlichen Bewegungsabläufe der einzelnen Bewegungsachsen (x, y) vorausberechnet und aufeinander abgestimmt werden, und wobei die Motoren der Bewegungsachsen (x, y) so angesteuert werden, dass das Regalbediengerät die Bewegung auf einem vorausberechneten Fahrweg (6) ausführt, der auf einem Satz von aufeinander abgestimmten Bewegungsabläufen der einzelnen Bewegungsachsen (x, y) basiert,
**dadurch gekennzeichnet,**
**dass** eine Menge mit mehreren Sätzen von aufeinander abgestimmten Bewegungsabläufen berechnet wird, wobei diese Menge zumindest einen ersten Satz mit hinsichtlich der Schnelligkeit der Bewegung optimierten Bewegungsabläufen für einen Schnellgang und einen zweiten Satz mit hinsichtlich des Verbrauchs an elektrischer Energie optimierten oder zumindest teilweise optimierten Bewegungsabläufen für einen Spargang enthält, und dass anhand von Betriebsparametern des Regallagers (1), insbesondere anhand der für eine Bewegung zur Verfügung stehenden Zeit, ein Satz mit Bewegungsabläufen aus der berechneten Menge ausgewählt wird, um die Motoren der Bewegungsachsen (x, y) zum Ausführen eines Fahrwegs (6) anzusteuern.

2. Verfahren nach Anspruch 1,
**dadurch gekennzeichnet,**
**dass** der Satz mit hinsichtlich der Schnelligkeit der Bewegung optimierten Bewegungsabläufen für einen Schnellgang so vorausberechnet wird, dass für diejenige Bewegungsachse (y), die bei Maximalgeschwindigkeit aller Motoren des Regalbediengeräts für eine bestimmte Bewegung vom Startpunkt (3) zum Zielpunkt (4) am längsten Zeit für den notwendigen Bewegungsablauf benötigt (zeitkritische Bewegungsachse), ein Maximalgeschwindigkeits-Bewegungsablauf errechnet wird, während für die restlichen Bewegungsachsen (x) des Regalbediengeräts darauf abgestimmte Bewegungsabläufe errechnet werden, die im Ergebnis zu einem im wesentlichen kürzestmöglichen Fahrweg (6) führen.

3. Verfahren nach Anspruch 1,
**dadurch gekennzeichnet,**
**dass** der Satz mit hinsichtlich der Schnelligkeit der Bewegung optimierten Bewegungsabläufen für einen Schnellgang so vorausberechnet wird, dass für diejenige Bewegungsachse (y), die bei Maximalgeschwindigkeit aller Motoren des Regalbediengeräts für eine bestimmte Bewegung vom Startpunkt (3) zum Zielpunkt (4) am längsten Zeit für den notwendigen Bewegungsablauf benötigt (zeitkritische Bewegungsachse), ein Maximalgeschwindigkeits-Bewegungsablauf errechnet wird, während für die restlichen Bewegungsachsen (x) des Regalbediengeräts darauf abgestimmte Bewegungsabläufe errechnet werden, die vor dem oder gleichzeitig mit dem Bewegungsablauf der zeitkritischen Bewegungsachse (y) enden, und mit denen die entsprechend angesteuerten Motoren möglichst wenig elektrische Energie benötigen oder möglichst schonend betrieben werden.

4. Verfahren nach Anspruch 1,
**dadurch gekennzeichnet,**
**dass** der Satz mit hinsichtlich der Schnelligkeit der Bewegung optimierten Bewegungsabläufen für einen Schnellgang so vorausberechnet wird, dass für diejenige Bewegungsachse (y), die bei Maximalgeschwindigkeit aller Motoren des Regalbediengeräts für eine bestimmte Bewegung vom Startpunkt (3) zum Zielpunkt (4) am längsten Zeit für den notwendigen Bewegungsablauf benötigt (zeitkritische Bewegungsachse), ein Maximalgeschwindigkeits-Bewegungsablauf errechnet wird, während für die restlichen Bewegungsachsen (x) des Regalbediengeräts darauf abgestimmte Bewegungsabläufe errechnet werden, die vor dem oder gleichzeitig mit dem Bewegungsablauf der zeitkritischen Bewegungsachse (y) enden, und in welchen Beschleunigungsvorgänge der zugehörigen Motoren vorzugsweise dann vorgesehen sind, wenn diese Motoren von Motoren anderer Bewegungsachsen (5), insbesondere vom Motor der zeitkritischen Bewegungsachse y, rückgespeiste elektrische Energie erhalten.

5. Verfahren nach mindestens einem der Ansprüche 1 bis 4,
**dadurch gekennzeichnet,**
**dass** der Satz mit hinsichtlich des Verbrauchs an elektrischer Energie optimierten Bewegungsabläufen für einen Spargang so vorausberechnet wird, dass Beschleunigungsvorgänge der den Bewegungsachsen (5) zugeordneten Motoren vorzugsweise dann vorgesehen sind, wenn von Motoren anderer Bewegungsachsen (5) elektrische Energie rückgespeist wird.

6. Verfahren nach mindestens einem der Ansprüche 1 bis 5,
**dadurch gekennzeichnet,**
**dass** eine Menge mit mehreren Sätzen von aufeinander abgestimmten Bewegungsabläufen berechnet wird, wobei diese Menge außerdem einen dritten Satz mit hinsichtlich des Verschleißes des Regalbediengeräts und dessen Motoren optimierten Bewegungsabläufen für einen Schongang enthält.

7. Verfahren nach mindestens einem der Ansprüche 1 bis 6,
**dadurch gekennzeichnet,**
**dass** bei der Auswahl eines Satzes mit Bewegungsabläufen die momentane Auslastung des Regallagers (1) berücksichtigt wird.

8. Verfahren nach mindestens einem der Ansprüche 1 bis 7,
**dadurch gekennzeichnet,**
**dass** bei der Auswahl eines Satzes mit Bewegungsabläufen der momentane Anlagenzustand des Regallagers (1) berücksichtigt wird, insbesondere ob ein mit dem zu bewegenden Regalbediengerät transferiertes Lagergut an ein weiteres Handlingssystem weitergegeben werden soll und wann dieses weitere Handlingssystem für das Lagergut aufnahmebereit ist.

9. Verfahren nach mindestens einem der Ansprüche 1 bis 8,
**dadurch gekennzeichnet,**
**dass** bei der Auswahl eines Satzes mit Bewegungsabläufen eine vorwählbare und/oder durch einen Prognosealgorithmus bestimmte Verzögerungszeit berücksichtigt wird, indem der Satz mit hinsichtlich der Schnelligkeit der Bewegung optimierten Bewegungsabläufen für einen Schnellgang so vorausberechnet wird, dass für die zeitkritische Achse ein Bewegungsablauf errechnet wird, der um bis zum Wert der Verzögerungszeit langsamer als der Maximalgeschwindigkeits-Bewegungsablauf ist und/oder bis zum Wert der Verzögerungszeit später gestartet wird, abhängig von der hierdurch erzielbaren Einsparung an elektrischer Energie oder der hierdurch erzielbaren Reduzierung des Verschleißes des Regalbediengeräts und seiner Motoren.

10. Verfahren nach mindestens einem der Ansprüche 1 bis 9,
**dadurch gekennzeichnet,**
**dass** das Regalbediengerät oder mehrere Regalbediengeräte, abhängig von bereits erhaltenen Aufträgen oder abhängig von Prognosen zur zukünftigen Auslastung des Regallagers, in Arbeitspausen oder Arbeitsunterbrechungen Lagergut umschichten, um die Transportwege des umgeschichteten Lagerguts hinsichtlich erwarteter Bewegungsabläufe für einen Schnellgang zu optimieren.

11. Verfahren nach Anspruch 10,
**dadurch gekennzeichnet,**
**dass** ein zusätzlicher Bedarf an elektrischer Energie für das Umschichten des Lagerguts mittels einer Prognose über die Anzahl der wahrscheinlich im Schnellgang durchzuführenden Bewegungsabläufe mit den möglichen Einsparungen an elektrischer Energie, die durch das Umschichten des Lagerguts ermöglicht werden, saldiert wird und abhängig vom Ergebnis ein Umschichten des Lagerguts initiiert oder ein solches unterdrückt wird.

12. Regallager, umfassend mindestens ein Regalbediengerät mit mindestens zwei unabhängig voneinander steuerbaren, mittels elektrischer Motoren betriebenen Bewegungsachsen (x, y) zum Ausführen einer Bewegung von einem Startpunkt (3) zu einem Zielpunkt (4), um Lagergut innerhalb des Regallagers (1) und/oder in das oder aus dem Regallager (1) zu transferieren, weiterhin umfassend eine Steuereinheit zum Steuern der Motoren der Bewegungsachsen (x, y) des Regalbediengeräts sowie einen elektrischen Zwischenkreis zum Austauschen von rückgespeister elektrischer Energie zwischen den Motoren,
wobei die Steuereinheit so ausgebildet ist, dass sie die für eine Bewegung vom Startpunkt (3) zum Zielpunkt (4) erforderlichen Bewegungsabläufe der einzelnen Bewegungsachsen (x, y) vorausberechnet und aufeinander abstimmt, und dass sie die Motoren der Bewegungsachsen (x, y) so ansteuert, dass das Regalbediengerät die Bewegung auf einem vorausberechneten Fahrweg (6) ausführt, der auf einem Satz von aufeinander abgestimmten Bewegungsabläufen der einzelnen Bewegungsachsen (x, y) basiert, **dadurch gekennzeichnet,**
**dass** die Steuereinheit eine Menge mit mehreren Sätzen von aufeinander abgestimmten Bewegungsabläufen berechnet, wobei diese Menge zumindest einen ersten Satz mit hinsichtlich der Schnelligkeit der Bewegung optimierten Bewegungsabläufen für einen Schnellgang und einen zweiten Satz mit hinsichtlich des Verbrauchs an elektrischer Energie optimierten oder teilweise optimierten Bewegungsabläufen für einen Spargang enthält, und dass die Steuereinheit anhand von Betriebsparametern des Regallagers (1), insbesondere anhand der für eine Bewegung zur Verfügung stehenden Zeit, einen Satz mit Bewegungsabläufen aus der berechneten Menge auswählt, um die Motoren der Bewegungsachsen (x, y) zum Ausführen eines Fahrwegs (6) anzusteuern.

13. Regallager nach Anspruch 12,
**dadurch gekennzeichnet,**
**dass** die Steuereinheit den Satz mit hinsichtlich der Schnelligkeit der Bewegung optimierten Bewegungsabläufen für einen Schnellgang so vorausberechnet, dass sie ein Verfahren gemäß Anspruch 2 und/oder ein Verfahren gemäß Anspruch 3 und/oder ein Verfahren gemäß Anspruch 4 durchführt.

14. Regallager nach einem der Ansprüche 12 oder 13,
**dadurch gekennzeichnet,**
**dass** die Steuereinheit den Satz mit hinsichtlich des Verbrauchs an elektrischer Energie optimierten Bewegungsabläufen für einen Spargang so vorausberechnet, dass Beschleunigungsvorgänge der den Bewegungsachsen (5) zugeordneten Motoren vorzugsweise dann vorgesehen sind, wenn von Motoren anderer Bewegungsachsen (5) elektrische Energie in den Zwischenkreis rückgespeist wird.

15. Regallager nach mindestens einem der Ansprüche 12 bis 14,
**dadurch gekennzeichnet,**
**dass** die Steuereinheit eine Menge mit mehreren Sätzen von aufeinander abgestimmten Bewegungsabläufen berechnet, wobei diese Menge außerdem einen dritten Satz mit hinsichtlich des Verschleißes des Regalbediengeräts und dessen Motoren optimierten Bewegungsabläufen für einen Schongang enthält.

16. Regallager nach mindestens einem der Ansprüche 12 bis 15,
**dadurch gekennzeichnet,**
**dass** die Steuereinheit bei der Auswahl eines Satzes mit Bewegungsabläufen die momentane Auslastung des Regallagers (1) und/oder den momentanen Anlagenzustand des Regallagers (1) berücksichtigt, insbesondere ob ein mit dem zu bewegenden Regalbediengerät transferiertes Lagergut an ein weiteres Handlingssystem weitergegeben werden soll und wann dieses weitere Handlingssystem für das Lagergut aufnahmebereit ist, und/oder eine vorwählbare und/oder durch einen Prognosealgorithmus bestimmte Verzögerungszeit berücksichtigt, indem die Steuereinheit den Satz mit hinsichtlich der Schnelligkeit der Bewegung optimierten Bewegungsabläufen für einen Schnellgang so vorausberechnet, dass für die zeitkritische Achse ein Bewegungsablauf errechnet wird, der um bis zum Wert der Verzögerungszeit langsamer als der Maximalgeschwindigkeits-Bewegungsablauf ist und/oder bis zum Wert der Verzögerungszeit später gestartet wird, abhängig von der hierdurch erzielbaren Einsparung an elektrischer Energie oder der hierdurch erzielbaren Reduzierung des Verschleißes des Regalbediengeräts und seiner Motoren.

17. Regallager nach mindestens einem der Ansprüche 12 bis 16,
**dadurch gekennzeichnet,**
**dass** ein Lagerverwaltungsrechner vorgesehen ist, der mit der Steuereinheit des Regalbediengeräts oder den Steuereinheiten der Regalbediengeräte verbunden ist, welcher Lagerverwaltungsrechner, abhängig von bereits erhaltenen Aufträgen oder abhängig von Prognosen zur zukünftigen Auslastung des Regallagers, in Arbeitspausen oder Arbeitsunterbrechungen ein Umschichten von Lagergut initiiert, um die Transportwege des umgeschichteten Lagerguts hinsichtlich erwarteter Bewegungsabläufe für einen Schnellgang zu optimieren, wobei der Lagerverwaltungsrechner insbesondere den zusätzlichen Bedarf an elektrischer Energie für das Umschichten des Lagerguts mittels einer Prognose über die Anzahl der wahrscheinlich im Schnellgang durchzuführenden Bewegungsabläufe mit den möglichen Einsparungen an elektrischer Energie, die durch das Umschichten des Lagerguts ermöglicht werden, saldiert und abhängig vom Ergebnis ein Umschichten des Lagerguts initiiert oder ein solches unterdrückt.
